# FASCICULE DE BREVET EUROPEEN

(11) **EP 0 958 099 B1**
(45) Date de publication et mention de la délivrance du brevet: **20.03.2002**
(21) Numéro de dépôt: 98934704.2
(22) Date de dépôt: 23.07.1998
(51) Int. Cl.: B23P 19/04, B25H 1/04

(54) **MACHINE AUTOMATIQUE DE REPARATION DE DEFAUTS REPERES SUR DES PALETTES DE MANUTENTION**
AUTOMATISCHE VORRICHTUNG ZUM REPARIEREN VON DETEKTIERTEN FEHLERN AUF TRANSPORTPALETTEN
AUTOMATIC MACHINE FOR REPAIRING DEFECTS LOCATED ON A HANDLING PALLET

(30) Priorité: 24.07.1997 BE 9700643
(43) Date de publication de la demande: 24.11.1999
(73) Titulaire: Petruzzi, Franscesco, 4287 Racour-Lincent (BE)
(72) Inventeur: Petruzzi, Franscesco, 4287 Racour-Lincent (BE)
(86) Numéro de dépôt international: BE9800114
(87) Numéro de publication internationale: WO9904926

(56) Documents cités:
- EP-A- 0 249 402
- DE-A- 4 308 580
- DE-U- 9 415 991
- FR-A- 2 416 060
- US-A- 4 112 578
- US-A- 4 161 974

## Description

La présente invention a pour objet une machine automatique de réparation de défauts repérés sur des palettes de manutention dans laquelle on assure le repérage et l'encodage de défauts pour assurer une réparations automatique des défauts présents dans les palettes de manutention.

L'activité économique moderne s'est développée dans tous les secteurs et, parmi ceux-ci, celui des transports est celui où les exigences de qualité ont été les plus sévères. Le transport doit concilier la rapidité, la sécurité, l'intégrité de tous les biens convoyés.

Parmi tous les systèmes garantissant pour une vaste gamme de marchandises, les trois exigences ci-dessus, le système de transport et de stockage des marchandises sur palettes est le plus connu et le plus adopté. Ce type de matériel de manutention est utilisé dans des opérations de stockage et de transport où la résistance mécanique est hautement sollicitée.

Ceci est encore plus vrai depuis que les stratégies d'approvisionnement de toutes les entreprises des pays à haute technologie ont carrément pris l'option de faire un investissement minimum en biens entreposés et corrélativement de faire des efforts gigantesques pour que l'approvisionnement à toutes les mailles de la chaîne économique arrive "juste à temps".

La palette de manutention est un matériel réalisé d'habitude, en bois, par clouage. La valeur économique de cet objet est devenue importante. Deux raisons motivent cette augmentation: le nombre de palettes a grandi beaucoup et le bois qui en est le matériau constitutif, est une ressource que l'homme moderne ne peut désormais plus exploiter aveuglément.

Autrefois, il était assez courant que le bois d'une palette détruite soit brûlé sur place ou soit mis en réserve comme combustible d'hiver pour un entrepôt. La situation actuelle a changé et est totalement différente: la palette de manutention est un objet qui présente une valeur marchande et les marchandises sont associées désormais à des palettes qui sont facturées à un prix de consignation. La palette présente désormais une certaine valeur marchande. Elle n'est plus un objet jetable. Elle fait l'objet de vérifications, de réparations, de maintenance. En pratique, les opérateurs de l'industrie des transports et de l'entreposage considèrent que la durée de vie d'une palette est de quatre ans ( couramment entre trois et cinq ans). Au delà de cette période, l'objet n'assure plus correctement sa fonction au point de n'être plus utilisable.

Ces faits de la vie économique et industrielle ont eu une conséquence immédiate. Il s'est avéré économiquement rentable de procéder à la réparation des palettes. Dans les grands entrepôts, on procède depuis longtemps à un triage des palettes en trois grandes catégories: "en bon état", "en mauvais état" ou "à réparer". Les objets "en mauvais état" sont moins utilisés dans les opérations courantes. Ils sont utilisés jusqu'à ce qu'ils entrent dans la catégorie "à réparer". Ce qui est "à réparer" est démoli ou est remis, à la main, en état convenable à l'emploi, par le personnel, quand les activités d'entreposage sont moindres et autorisent à assigner certains membres du personnel à des tâches de réparation des palettes. Ceci est possible dans les entrepôts à faible rotation de stock.

Par exemple, l'exploitation des grands volumes de maturation contrôlée de fruits exotiques importés, tels que les bananes, permet de réserver, au cours d'une semaine d'activité, quelques heures durant lesquelles des réparations peuvent être faites sans troubler le déroulement général des activités des entrepôts. Dans d'autres circonstances, les palettes "à réparer" sont rassemblées et l'on procède à leur remise en état.

Dans certains cas, celle-ci a lieu sur place et est réalisée par une équipe de travailleurs spécifiques qui sont des menuisiers oeuvrant à la pièce et sans systématisation du travail. Dans d'autres circonstances, le lot de palettes "à réparer" est expédié chez un réparateur. Le réparateur combine souvent les activités de reconditionnement de palettes à celles de fabrication et, de ce fait, la coordination est parfois difficile. Les équipements ou systèmes de réparation de palettes sont, en réalité, peu nombreux et sont la propriété de très grands fabricants. Ceci provoque une certaine distorsion dans les activités des petits exploitants qui doivent obéir aux plannings astreignants des grands opérateurs industriels.

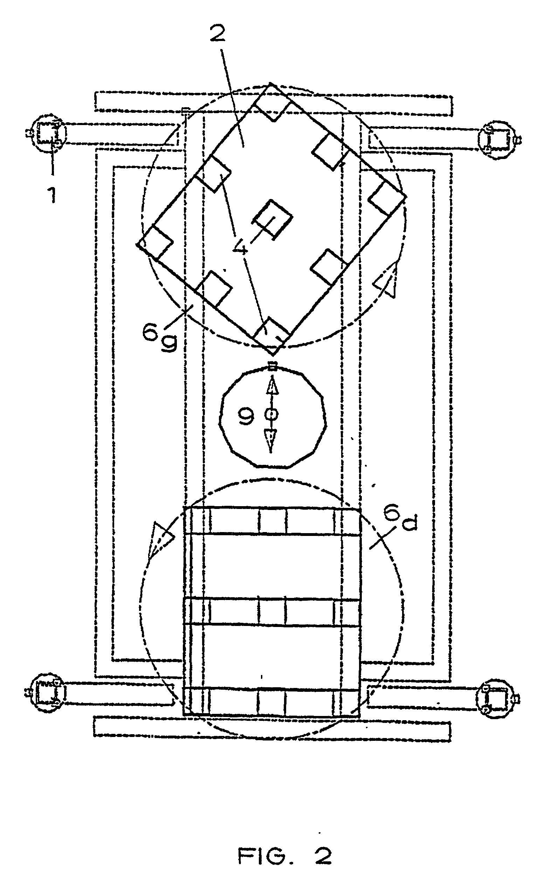

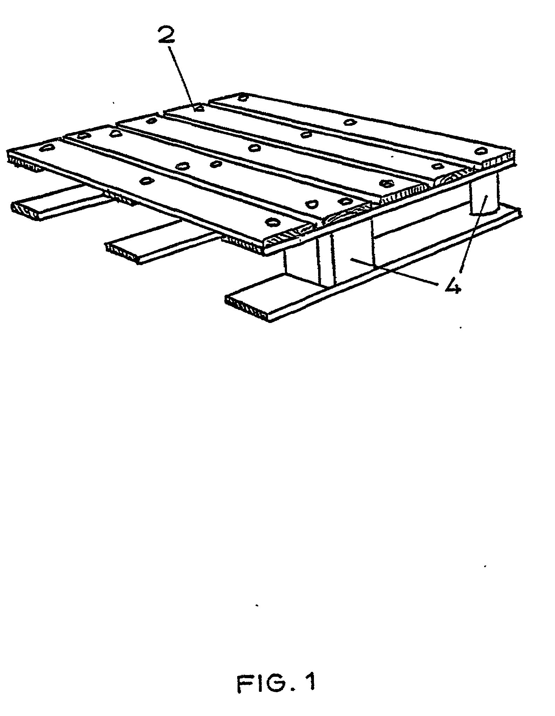

L'état de la technique en matière de réparation de palettes peut être illustré par le brevet américain US-A-4 743 154 attribué à "American Pallet Systems, Inc." et intitulé "Pallet Inspection and Repair System". Le système décrit est fixe et modulaire. Il fait partie d'un ensemble assez important (voir fig.1 du document) avec une configuration présentant cinq unités réalisant cinq opérations. Deux unités latérales servent à l'acheminement des palettes qui sont empilées verticalement et sont convoyées dans ces unités au moyen de rouleaux transporteurs (fig.1, 17a, b, c). L'unité de distribution (13) de palettes fonctionne sous les commandes programmées d'un automate (25) comportant de manière usuelle, une console d'entrée de données munie de lampes et d'indicateurs d'états du système.

La séquence opératoire consiste à envoyer une pile de palettes sur une table d'ascension (19, voir figures) qui assure la translation verticale des palettes jusqu'à un certain niveau prédéterminé où deux fourches symétriques ( respectivement à gauche et à droite de la table ) saisissent la pile de palettes. La table (19) continue sa translation vers le bas, ce qui libère la palette inférieure par rapport à ses voisines immédiates qui la surplombent dans la pile de palettes.

Lorsque la palette inférieure a été isolée de celle-ci, un dispositif convoyeur à trois chaînes parallèles d'entraîne-ment est mis en action par un moteur électrique réversible. Des contacts de fin de course permettent de délimiter correctement les déplacements de la palette. Elle est amenée successivement d'une position de réception à une position d'inspection.

Les figures 16 et 17 du document US-A-4 743 154 illustrent enfin les modes de fonctionnement possibles avec un tel système d'inspection/réparation de palettes. Le système est finalement une combinaison permettant:
- la division des empilements des palettes en groupes de palettes moins hauts,
- l'inspection des faces inférieure et supérieure des palettes dans un partie de l'équipement dont les différents éléments se structurent automatiquement pour former un cadre d'inspection,
- le transport des palettes à réparer vers une station séparée de réparation.

D'un certain point de vue, on peut considérer que le système d'inspection/réparation selon US-A-4 743 154 procède en alternance dans le temps selon que l'on travaille avec des palettes à gauche ou à droite de la table d'inspection principale. Il ne s'agit cependant pas de "travail à temps masqué" permettant à deux opérateurs d'effectuer les mêmes tâches mais en temps décalé le long d'un même trajet où se font des opérations correctement accordées dans leur séquence.

Les opérations nombreuses, à réaliser sur un nombre énorme de palettes et en disposant d'un personnel d'exécution et d'entretien qualifié sont réalisables à l'aide de l'ensemble automatisé selon US-A-4 743 154. Il n'est pas possible de faire travailler un opérateur sans l'avoir préalablement formé spécialement au fonctionnement précis et aux aspects fonctionnels principaux de la machine. Ce genre d'équipement est dès lors strictement réservé aux grands opérateurs industriels, peu nombreux, qui réparent les palettes à une grande échelle.

L'ensemble réparation selon US-A-4 743 154 est enfin également réputé modulaire mais il n'est pas à proprement parler déplaçable sur des distances supérieures aux dimensions d'un grand hall de réparation/fabrication de palettes.

Par ailleurs, divers autres documents concernent encore des procédés et des dispositifs de réparation de palettes :

L'état de l'art antérieur sera donc illustré d'avantage par le document DE 43 08 580 A1 (KETTERER MASCHINENBAU) et a pour objet un procédé et un ensemble mécanique agencé pour réaliser la réparation de palettes de manutention endommagées et spécialement des EURO-palettes. Selon le document, la palette est centrée et fixée et l'enlèvement des dés-supports et de la (ou des) planche(s) défectueuse(s) est réalisé par un organe de séparation mobile selon un trièdre trirectangle (X,Y,Z) et également pourvu de scies rotatives jumelées. Les temps opératoires de l'organe de séparation (qui peut être un poste de découpe au LASER) est divisé en deux périodes utiles au traitement séquentiel en deux positions correspondant à deux faces de la palette tournées l'une au regard de l'autre de 180°. L'intallation décrite dans ce brevet peut travailler en mode "manuel" ou en mode "automatique".

Le document US-A-4 161 974 ( PATTERSON LIONEL ) traite d'un agencement transportable servant de bâti pour faire fonctionner divers outils à travailler des pièces en bois. On fait usage de deux paires de jambles montées à rotation sur les quatre coins d'un cadre support.

Le brevet FR- A- 2 674 787 ( WOLSON LAWRENCE S ) a pour objet une machine qui est une table de découpe de matéraux en feuilles qui est jumelée à une table d'évacuation. Tout le dispostif est déplaçable aisément en raison du fait qu'il présente deux positions extrêmes en lesquelles le volume est respectivement minimum ou est, au contraire, déployé.
- Le modèle d'utilité DE 941 5991 U ( HEUSER DIRK ) est plus spécifiquement dirigé vers le démontage de palettes en bois. Il traite d'un ensemble complètement automatisé fonctionnant à l'aide d'un programme où les différentes séquences opératoires sont reprises et mises en mémoire.
- US-A-4 112 578 ( SANFORD DALE J ) a pour objet un appareil pour le démontage des palettes monté sur un camion. La palette est essentiellement maintenue par un vérin central de serrage à force travaillant avec un barre inférieure de fixation 44 ( voir figures ) pour permettre la mise en oeuvre d'organes de soulèvement ayant la forme d'un "C".
- Le document JP-A-58143926 A ( BROTHER KOGYO KK ) décrit une série de stations d'assemblage d'objets non spécifiés, stations dans lesquels sont mis en oeuvre des robots montés sur des axes de translation .
- US-A-4 757 599 ( MARVIN L. BANE ) concerne un dispositif de démontage des composants d'une palette Le dispositif erst réputé pouvoir enlever tout bloc ou dé de bois présent sur la palette pour le remplacer. Les clous sont ici sciés par une lame plate.

Enfin, selon FR-A- 2 416 060, document correspondant français d'une demande de modèle d'utilité déposée en République Fédérale d'Allemagne au nom de FOERDER TECHNIK HAMBURG HARRY LASSIG, l'inspection et le triage sont également réalisés selon l'art antérieur, à l'aide d'un dispositif rotatif travaillant conjointement avec des caméras électroniques.

Il s'agit, en pratique, d'une trieuse réputée déplaçable, constituée de deux convoyeurs successifs et d'un poste de mise en rotation où des mesures sont effectuées par des caméras électroniques. Le procédé est basé sur l'emploi d'une palette de référence et il peut fonctionner en mode manuel ou en mode automatique.

Les techniques antérieures dont le but est de repérer, d'identifier et finalement réparer les palettes ont été rappelées à l'aide des documents ci-dessus.
Elles apportent une réponse satisfaisante à la nécessité désormais reconnue de procéder à la réparation de palettes. Leur pleine efficacité est démontrée. L'emploi des palettes et l'explosion de l'activité des transports, de manutention, ont conduit à une forte activité de réparation de palettes. Cette activité se réalise dans des conditions qui ont évolués très fortement. Cette évolution se traduisait avant tout par la nécessité d'économiser les heures de travail humain en procédant à une automatisation poussée des tâches. C'est désormais sur la nature de ces tâches et sur la solution des problèmes liés à leur automatisation qu'ont porté les efforts du requérant: les tâches sont désormais analysées, minutées, classées selon leur importance. Dans ce classement, l'importance relatives des différentes tâches a été pondérée par le prix de la main d'oeuvre de telle sorte que, comme dans d'autres branches de la technique des automates, la priorité est accordée à l'automatisation de tâches exigeant beaucoup d'heures de travail et surtout de travail humainement peu valorisant.

C'est donc dans ce contexte précis de la demande actuelle en réparation de palettes que se situe la présente invention.

Dans la conjoncture actuelle des transports, les équipements proposés qui ont été évoqués ci-dessus sont inadaptés pour les raisons qui sont explicitées dans la suite.

Le gestionnaire doit en fait trouver un optimum. Quand répare-t-on sur place? Quel lot minimum de palettes faut-il réparer? Comment allouer correctement les ressources humaines sur un site d'exploitation où l'on entrepose et l'on gère un parc de palettes: vides, utilisées, non triées, réparables, à déclasser.

Pour résoudre ces problèmes, dans le but d'éviter des expéditions coûteuses vers des stations de réparations éloignées, certains exploitants de taille moyenne paient des heures de travail supplémentaires pour faire sur place des réparations à la main (marteaux, clous, agrafeuses, pinces).

D'autres combinent leur cycle d'activité pour grouper avec un collègue, des expéditions de palettes vers un réparateur de grande taille. Cette seconde méthode est un surcroît de travail opérationnel et administratif dans le contexte de la demande actuelle en réparations et elle ajoute un type de convois supplémentaires sur un réseau routier déjà fort chargé.

Le schéma de réparation classique est conçu pour les très grandes séries. Il est statique et ne répond pas aux exigences concrètes des opérateurs du monde du transport.

Dans une activité portuaire, par exemple, l'équipement doit impérativement être transportable d'un entrepôt à l'autre car il s'agit d'aires d'entreposage gigantesques. Il n'est plus question de faire des réparations de façon centrale avec un équipement lourd non déplaçable sans des heures longues d'inactivité.

La présente invention a pour objet de présenter un équipement répondant à ces situations industrielles et économiques nouvelles récentes. Elle conserve la méthode analytique de réparation automatique de l'art antérieur: tri, inspection, élimination des éléments cassés, reconditionnement. Le procédé de l'invention qui est adopté dans le cadre de cette méthode est cependant, selon l'invention, totalement orienté vers l'utilisation de modules d'une mobilité optimale: l'équipement est conçu pour être déplacé une ou plusieurs fois, car le temps est gagné en gardant les mêmes équipes de travail qui tournent dans un même secteur en réalisant des missions d'interventions sur des palettes.

Les missions sont réalisées sur place chez les clients au départ d'un point central dans une aire d'activités importante comportant de nombreux points de stockage disséminés (ports, points terminus de lignes aériennes, zone de colisage, quais de débarquement).

Par rapport à ces installations de maintenance ou de réfection de palettes de l'art antérieur, la présente invention a pour objet un équipement de réparation et de rénovation d'un ensemble structuré d'éléments rectilignes faits en matériau naturel ou de synthèse tel que, par exemple, une palette de manutention, présentant un poste d'inspection de forme circulaire et pouvant travailler en mode "manuel" ou en mode "automatique", avec un ordinateur de commande et une base de données duale dans laquelle un ensemble de défauts à traiter sont mis en mémoire.

L'équipement est de conception spécifique car l'ensemble comporte une scie démontable fixée sur un châssis que l'on peut assembler et intégralement transporter sur une courte ou une longue distance grâce à la mise en oeuvre de deux modules d'emboîtement inférieur et supérieur qui, sont soutenus par quatre pieds rétractables. Les opérations de démontage, transport, réinstallation, de l'équipement d'un endroit à l'autre d'une vaste aire d'entreposage sont beaucoup plus rapides que celles de tri et de transport des palettes à réparer défectueuses vers un lieu de réparation, même si ce dernier est situé dans ladite aire d'entreposage.

Un ensemble structuré d'éléments rectilignes du genre d'une palette de manutention qui fait notamment l'objet de la présente invention est illustré succinctement à la fig.1.

La structure comporte une face supérieure servant au chargement et une face inférieure d'appui. Ces deux faces sont parallèles, entretoisées et sont assemblées l'une à l'autre par une pluralité de blocs cubiques ou cylindriques qui sont disposés de façon à réaliser une structure rigide présentant une résistance importante au poids de toute charge que l'on pourrait disposer sur la face supérieure de dépose. La pluralité de blocs est susceptible de recevoir au moins un moyen d'identification de la palette ou des différents produits qui sont entreposés sur elle. L'assemblage ainsi conformé présente une surface d'entrée pour les fourches d'un engin de manutention. Dans cette surface d'entrée, les chocs sont nombreux et sont occasionnés souvent par les erreurs de pilotage du conducteur de l'engin de manutention. Les blocs cubiques garantissent la rigidité de la structure et résistent assez bien aux percussions des fourches d'un "clark".

Les planches supérieures et inférieures, sur les faces respectives, sont sollicitées d'une manière non symétrique. Ceci est très manifeste lorsque la palette est utilisée dans des circonstances où:
- elles subissent de façon continue au cours d'un stockage, la charge des palettes qui les surplombent et qui peuvent présenter un défaut d'alignement dans le sens vertical, lorsque les différents blocs homologues ne sont pas d'aplomb au sein du volume de stockage (piles de palettes penchées, charges non équiréparties dans le sens vertical),
- elles sont également soumises brusquement aux forces instantanées qu'occasionnent les mauvaises manoeuvres principalement quand la palette immédiatement supérieure, surplombant, est déposée.

De ces défauts opératoires qui sont fréquents dans les tâches d'entreposage et de manutention, résulte un ensemble d'avaries ou de dégâts sur les planches des faces supérieure et inférieure. Il s'agit principalement de cassure ou de fêlure à un endroit de moindre résistance, comme un noeud dans le bois, un point d'attaque chimique accidentelle ou un place de clouage défectueux.

Les palettes défectueuses peuvent en fait être caractérisées de façon précise pour que leur réparation soit faisable automatiquement.
Selon la présente invention, le trajet d'une palette défectueuse lors de son passage dans l'aire de réparation où opère la machine est réalisée d'une manière bien précise et cadencée selon les techniques propres aux procédés automatiques. On utilise notamment un dispositif de dépose de la palette qui est une roue permettant la présentation angulaire de la palette. Sur cette roue la palette sera en trois positions d'arrivée, de détection, de départ après réparation du défaut. Le défaut courant est celui où une planche est cassée et doit être sciée et remplacée.

Selon la présente invention, la scie est mise en fonctionnement asservi et est mise en place par un mode de positionnement sur un axe vertical muni d'un vérin.

L'invention prévoit également que la station de détection et réparation de défauts soit en mise en situation de travail sur un site donné, tout en étant déplaçable en d'autres endroits selon les impératifs de la production. En fait, la machine de réparation de défauts selon l'invention est munie de béquilles de fixation. Quand ces béquilles sont en position rétractée, la machine est prête à être transportée sur un autre site.

Une autre particularité de l'invention est qu'on utilise d'une base de données ouverte où sont mis en mémoire les différents défauts qui se présentent sur une palette à réparer.

La machine selon l'invention est finalement encore intégrable sans difficulté dans un ensemble cybernétique d'assemblage de planches et blocs pour réaliser une palette de manutention, ensemble dans lequel le dernier poste opératoire est peut être mis en service ou être rendu inopérant puisqu'il s'agit d'un poste d'inspection/réparation de défauts selon la présente invention que l'on peut directement brancher sur une ligne automatique existante de fabrication de palettes.

L'équipement selon l'invention est un équipement de réparation et de rénovation d'un ensemble structuré d'éléments rectilignes faits en matériau naturel ou de synthèse tel que, par exemple, une palette de manutention, dans lequel deux unités distinctes comportent des moyens de saisie/mémorisation de données et sont installées de sorte que les diverses tâches de réparation/rénovation puissent être effectuées à l'aide de ces unités, par des opérations en temps masqué grâce à l'action conjointe et correctement synchronisée d'interventions humaines et d'interventions de robots installés sur lesdites unités.

Une particularité marquante de l'invention est que chaque unité est montée sur une structure à module d'emboîtement et est déplaçable du fait qu'elle est supportée par quatre pieds rétractables à vérin intégré. L'équipement est de type mixte : il est en effet est en effet conçu et réalisé de manière très spécifique de sorte que les tâches de réparation/rénovation effectuées "en temps masqué", à l'aide des robots installés sur lesdites unités, soient réalisées par des opérations faites en mode "manuel" ou en mode "automatique" et soient essentiellement des tâches séquentielles de sciage et de clouage.
Pour ces opérations, la technique existe et est disponible. Sa mise en oeuvre exige cependant un savoir-faire qui sont en fait essentiellement le fruit du dialogue constructif entre l'utilisateur quotidien, le dirigeant d'équipe et le concepteur.

L'ensemble présente une unité à robot de sciage qui comporte une scie horizontale à fonctionnement symétrique et coulissant le long d'un axe vertical.

L'équipement de réparation et de rénovation d'un ensemble structuré d'éléments rectilignes faits en matériau naturel ou de synthèse tel que, par exemple, une palette de manutention, selon l'invention a la spécificité que les points d'intervention (i, m, h) où l'ensemble structuré ou la palette doit être réparé sont déterminés par deux paramètres dont l'un est la position angulaire d'un plateau support et l'autre est l'amplitude de la translation nécessaire pour que ladite scie horizontale soit en contact avec la palette à l'endroit du défaut.

Selon l'invention, les paramètres déterminant les points d'intervention (i, m, h) sont stockés dans la mémoire d'un ordinateur et servent de données d'entrée lors de l'intervention des machines robotisées effectuant les opérations de sciage et de clouage.

Pour réaliser correctement les opérations de réparation/rénovation à l'aide d'un équipement selon la présente invention, les paramètres servant de données d'entrées sont associés, pour l'opération de sciage effectuée par le robot de sciage monté sur l'unité de sciage, à un paramètre supplémentaire fixant l'amplitude du coulissement de la scie le long dudit axe vertical (16) de sorte que trois niveaux de sciage puissent être choisis.

D'autres buts, avantages spécifiques et particularités de la présente invention seront donnés à titre illustratif et non limitatif sur base des dessins annexés dans lesquels:
- La figure 1 illustre un type de structure assemblée d'éléments rectilignes en bois ou autre, dans le cas particulièrement important de la palette de manutention,
- La figure 2 est une vue d'en haut de la station jumelée de sciage gauche et droit selon l'invention, avec un plateau (6g,6d) ayant tourné d'un certain angle de manière à présenter le point défectueux à la scie,
- La figure 3 montre schématiquement l'ensemble de la station de détection et réparation de défauts en situation de travail sur un site donné,
- La figure 4 illustre la machine de réparation de défauts selon l'invention lorsque les béquilles de fixation sont mises en position rétractée (fig.4a: vue latérale, fig.4b: vue d'en haut),
- La figure 5 représente la structure mécanosoudée supportant la machine de réparation selon l'invention avec une vue des mouvements de raccourcissement des quatre pieds et de pivotement des quatre jambes de support,
- La figure 6 est un autre schéma de l'ensemble de la station de détection et réparation de défauts en situation de travail sur un site donné,
- La figure 7 est une vue partielle de la machine selon l'invention dans le but d'illustrer le mode fixation de la palette avec les trois positions principales de sciage,
- La figure 8 illustre le portique de support permettant la mise en translation de la scie ou des scies,
- La figure 9 illustre sous forme d'ordinogramme le flux d'opérations effectuées pour effectuer de façon tout à fait automatique les opérations de sciage et de clouage à l'aide des stations jumelées de sciage et clouage selon l'invention.

La fig.1 illustre un ensemble structuré bien spécial d'éléments rectilignes, qui est une palette de manutention à laquelle l'équipement selon l'invention est spécifiquement applicable. Dans une palette (fig.1) deux étages de planchettes (3) sont séparés par des blocs ou dés (4). Ces dés peuvent être de forme et résistance diverses et l'on a représenté à la fig.1 deux formes de dés (4) les plus couramment rencontrées. La réparation d'une palette ne concerne en général que les planchettes; les dés sont résistants et, s'ils sont endommagés, toute la structure est toujours jetée au rebut. Les planchettes (1) sont systématiquement remplacées quand toute la structure a gardé sa rigidité. Pour les remplacer, on ne les décloue pas mais on les scie à l'endroit de fixation des dés (4).

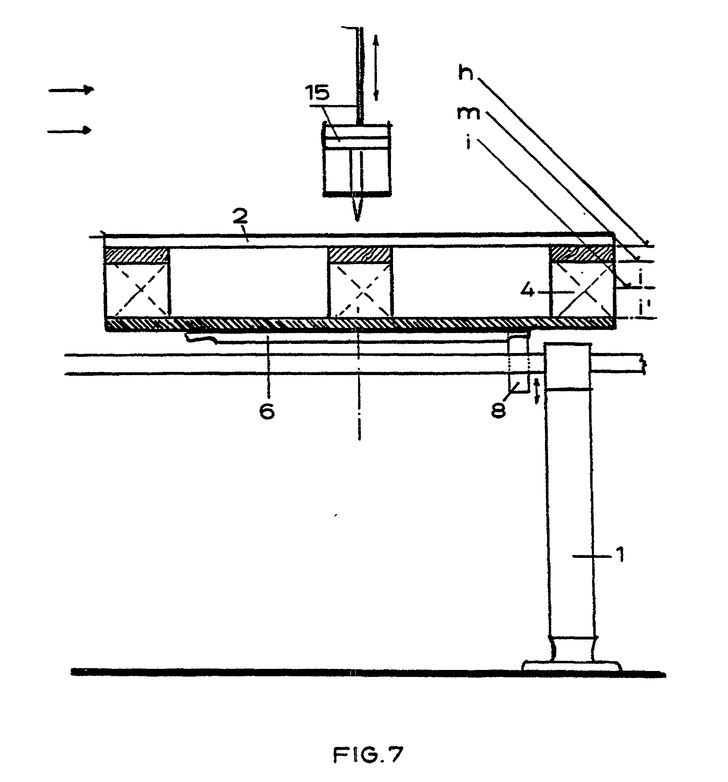

Selon le cas, trois niveaux de sciage sont à envisager: on peut scier pour libérer la planche supérieure (niveau h fig.7); on peut scier à la partie médiane du dé pour libérer la planche de renforcement; (niveau m de la même fig.); on peut enfin scier à la partie inférieure du dé (4) pour libérer celui-ci (niveau i de la fig.7).

Il arrive, pour certains types de palettes, que la fixation traverse les trois niveaux et que la précision de ces niveaux soit invariable . Dans ces conditions, on prévoit selon la présente invention, de mettre en oeuvre trois scies horizontales 9h, 9m et 9i superposées et séparées par des pièces intercalaires qui s'échelonnent donc perpendiculairement à l'axe (16) de translation verticale.

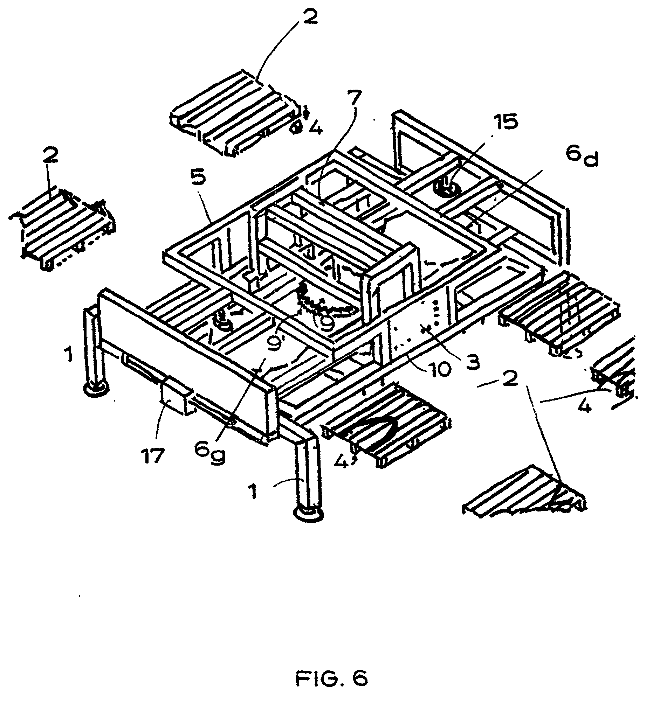

Ces scies sont avant tout utilisées dans le cas d'un type bien précis de palette où les défauts sont situés presque systématiquement sur les trois niveaux (i, m, h) signalés plus haut (voir fig.6 où l'on a seulement représenté deux scies (9) et (9').

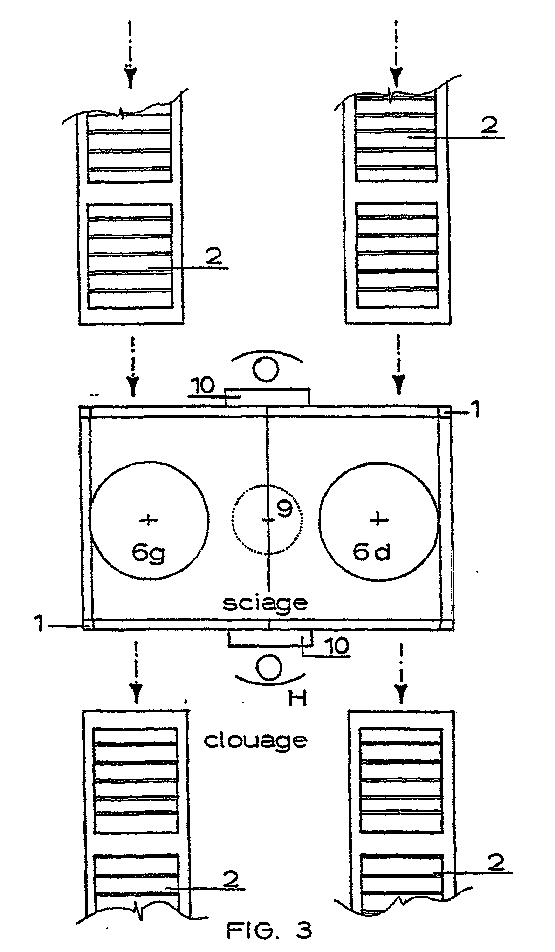

La station robotisée de sciage selon l'invention est visible par l'illustration donnée par les fig.3 et 6. Une des caractéristiques essentielles de ce matériel est d'être facilement déplaçable d'un endroit à l'autre et d'être, une fois arrivé sur le nouveau lieu d'implantation choisi, remontable en moins de quinze minutes.

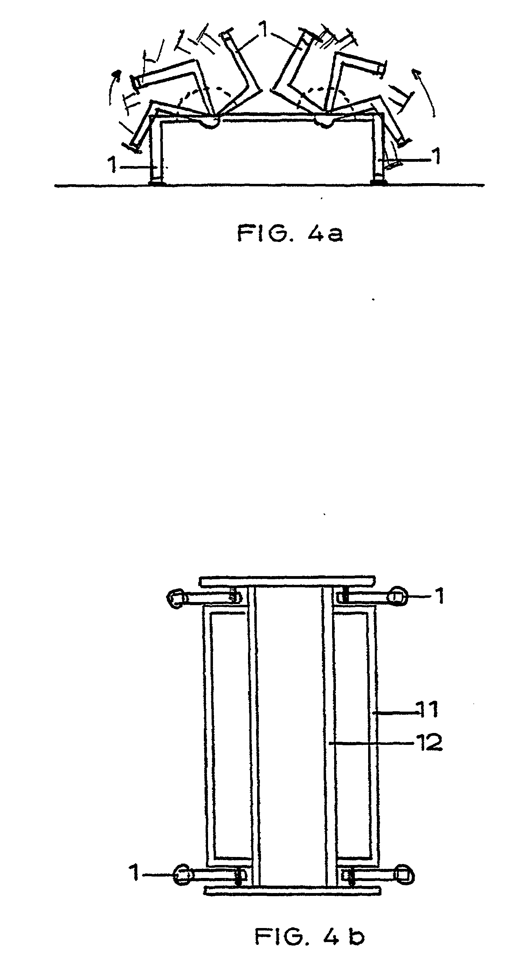

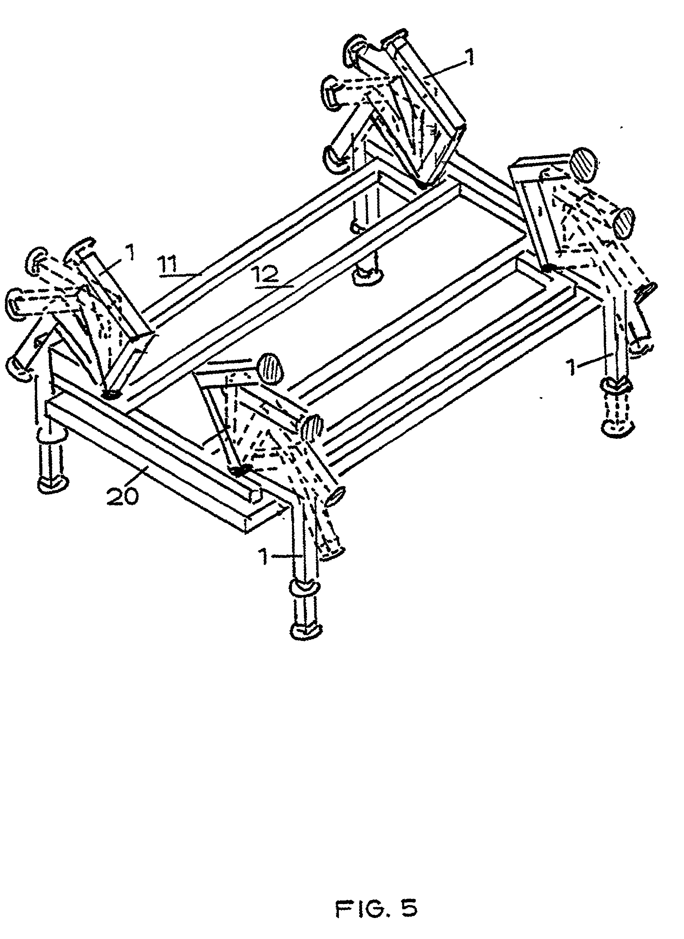

L'équipement selon la présente invention est spécifiquement prévu pour être déplaçable très rapidement. Comme on le verra par la suite, la facilité de déplacement est fondée sur deux opérations réalisées successivement: le levage de l'ensemble et l'escamotage des quatre pieds (1). L'équipement est en effet constitué de deux sous-ensembles emboîtés (11) et (12) (fig.5). L'ensemble du bas (12) a une largeur telle que son niveau inférieur peut être pénétré par le plateau d'une camionnette de déménagement classique du fait que les quatre pieds (1) peuvent soulever l'ensemble par actionnement hydraulique de chacun des vérins qui sont montés et présents, enfermés dans la jambe des pieds (1). Les fourches d'un engin élévateur suffisamment puissant et équilibré conviennent également pour pénétrer sous l'équipement. Le niveau de l'engin élévateur est repris à la fig.5 sous la référence numérique (20). Une fois en hauteur, on actionne manuellement les quatre pieds (1) en les faisant pivoter (voir fig.4a et 5). Dans ces conditions, une camionnette peut être utilisée: elle aura une fonction portante par son plateau (20) dès que les pieds seront totalement escamotés. Il est donc possible de transporter et remettre à l'état opérationnel sur une aire de travail donnée, l'équipement complet, non démonté ou non désassemblé, d'un endroit à l'autre, en moins d'un quart d'heure.

Concrètement, les deux modules supérieur et inférieur restent emboîtés et l'équipage (ou portique) (7) de translation de la scie (9) ou d'un triplet de scies (9i, 9m, 9h) peut rester en position bloquée médiane pendant toute la durée du transport.

Au point d'arrivée, qui sera le nouvel endroit de fonctionnement de l'équipement, les quatre pieds sont remis en position verticale (pivotement en sens inverse). En position verticale, la centrale hydraulique incorporée permet grâce à la commande (17) (fig.6) d'exercer aux quatre points de sustentation, les quatre réactions nécessaires pour équilibrer la station modulaire en son nouvel emplacement de travail. Le même principe permettant de déménager d'autres composants de l'installation de réparation telle que proposée par l'invention.

On peut par exemple déménager une station de clouage, une rampe de convoyage ou autre: on réalise successivement l'escamotage des pieds (1), le transport, la remise en place verticale des pieds (1) et la reprise du poids par mise en action des forces hydrauliques de réaction aux quatre points de sustentation.

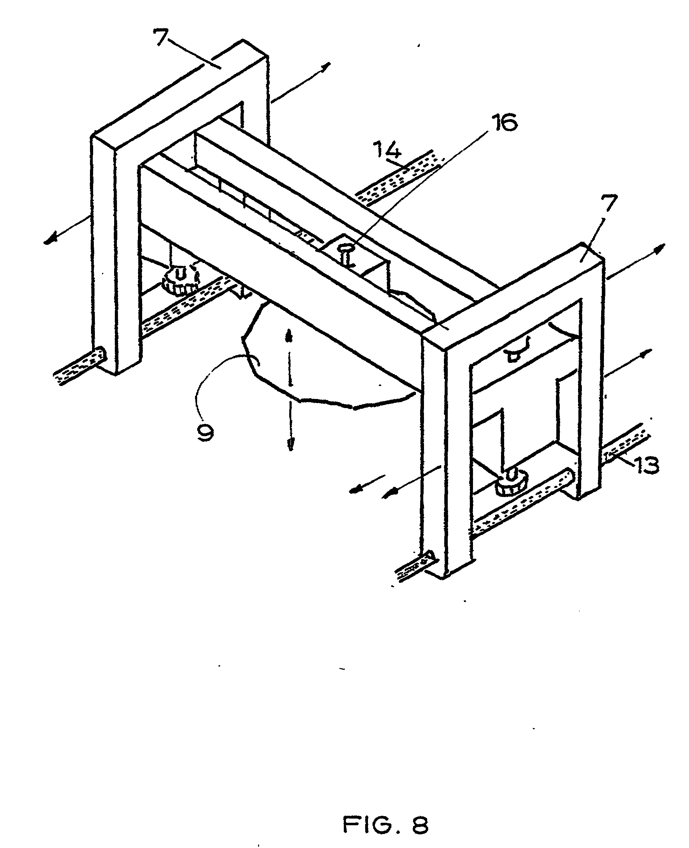

La facilité de. déplacement de l'équipement selon l'invention ayant été décrite, l'invention sera d'avantage comprise en se référant aux fig.6, 7 et 8. Le sciage est, comme on l'a vu, essentiellement la partie primordiale dans la réfection. La fig.8 illustre de façon schématique le portique (7) de déplacement longitudinal pour réaliser l'opération de sciage. Le portique (7) de déplacement longitudinal est assis à cheval à l'aplomb du plan de deux plateaux rotatifs (6).

Le portique (7) soutient, en son milieu de portique une lame de scie (9) actionnée par un moteur de sciage non représenté, fixé de préférence horizontalement sur la partie transversale du portique. La scie horizontale (9) peut coulisser selon un déplacement le long d'un axe (16) de translation verticale. Le déplacement de la scie présente donc deux degrés de liberté: une translation selon les axes (13) et (14) de coulissement du portique et une translation le long de l'axe vertical (16) ( se reporter à la fig.8 ).
Selon la présente invention, ces deux degrés de liberté associés à la rotation possible des deux plateaux 6g et 6d permettent de pratiquer un sciage horizontal à trois niveaux de sciage (i, m, h) en n'importe quel emplacement du dé où l'on intervient sur la palette. Cette évidence est le mieux visible à la fig.2, où l'on peut observer que le plateau supérieur, sur le dessin, a tourné d'un certain angle pour que la scie (9) puisse y avoir accès.

A la fig.6 on a donné une vue d'ensemble de la partie centrale principale de sciage de l'équipement selon l'invention. Un opérateur encode sur le tableau de commande (3) les coordonnées de point d'intervention. L'ordinateur (10) traduit ces données encodées de défauts de palette en angle de rotation de plateau rotatif, en pas de translation du portique (7) et en pas de translation déterminant la hauteur sur l'axe vertical (16) de la scie (9).

Séquentiellement, l'opérateur aura amené la palette sur le plateau (6). L'ordinateur, quand l'opération de placement de la palette aura été acquittée, commande le vérin (15) de serrage de la palette (4) sur le plateau rotatif (6). La fin du serrage de la palette par le vérin (15) est commandée par l'ordinateur (10) sur base du contact électrique de fin de course d'un limitateur de course non représenté qui transmet un signal dès qu'une force de serrage suffisante est transmise par le vérin (15).

A la figure 2, on voit nettement que la scie, par sa translation perpendiculaire aux voies d'avancement du processus de réparation, peut intervenir sur la voie de gauche et sur la voie de droite de la ligne de réparation. La même illustration permet de se rendre compte que l'ordinateur peut envoyer à un moteur (non représenté) de mise en rotation, un signal qui a pour effet de faite tourner la palette. Sur base des données d'encodage de défaut, un ergot (8) (fig.7) de butée de rotation arrête le déplacement angulaire de la palette à un angle pour lequel on pourra réaliser le sciage, dans la mesure où la scie (9) aura été déplacée en translation le long des deux axes (13) et (14).

Sur la fig.2, on peut voir que le plateau rotatif (6) de la voie de gauche a tourné et que, de ce fait, l'accès à un dé ou bloc (4) bien précisé par l'opérateur, est possible. Il est clair qu'il est possible, cinématiquement à l'aide de la conjugaison de déplacement de la palette (2) entraînée par le plateau et du déplacement de la scie (9) de scier n'importe quel bloc (4) quelle que soit sa position sur la palette. La fig.7 montre également que, pour chaque couple de coordonnées planes de point de sciage, trois niveaux de sciage sont possibles: on réalisera comme déjà signalé le sciage soit séquentiellement avec une scie unique, soit, dans le cas d'un défaut fréquent pour un même type de palette, on actionnera trois scies (9) qui tourneront en même temps.

Pour fonctionner correctement il est évident que l'équipement selon la présente invention doit être implanté dans certaines conditions bien précises et être cadencé de manière à travailler en "temps masqué" ainsi qu'il est expliqué ci-après.

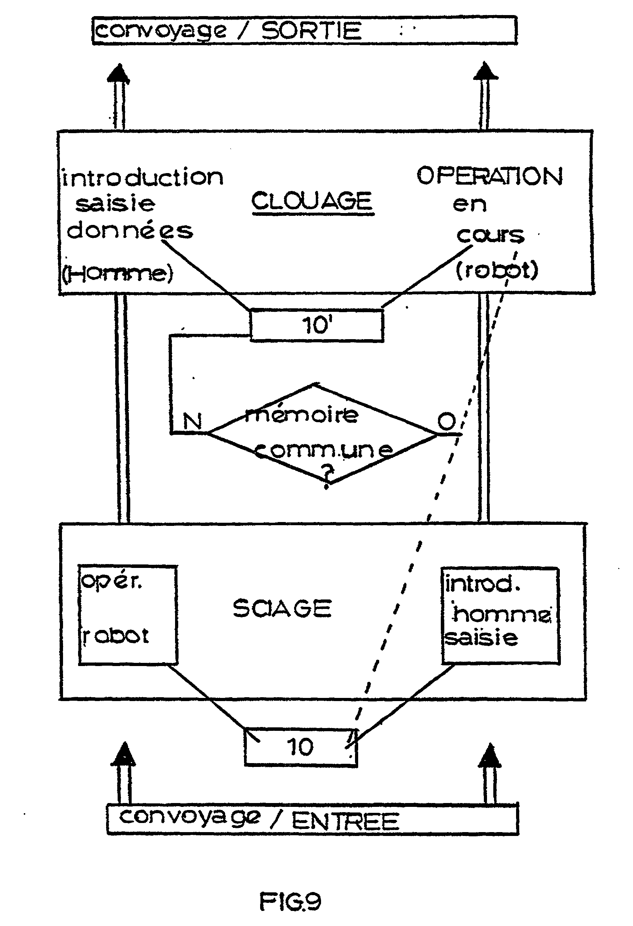

La rénovation d'une palette consiste essentiellement en une série d'actes accomplis en séquence: arrivée, inspection, sciage, clouage, évacuation. Il est évident que l'invention prévoit, selon le niveau d'automatisation voulu, la mise en oeuvre de modules de convoyage de palettes à l'arrivée et à l'évacuation des structures traitées (voir fig.9).

La particularité de l'invention est de présenter des stations jumelées, travaillant en parallèle. Ces stations jumelées fonctionnant en parallèle sont au nombre de deux: une première effectue le sciage, la suivante effectue le clouage est donc située en aval de la première, en série (voir fig.9). Le fonctionnement en parallèle des stations jumelées successives de sciage et de clouage permet de conserver en fonctionnement continu les machines et de garantir aux opérateurs une activité continue, s'exerçant alternativement sur la partie de gauche (g) et sur la partie de droite (d) de l'équipement.

Une intervention humaine a donc lieu exactement au moment du début et pendant la durée d'un fonctionnement de la machine jumelée. Ainsi, par exemple, sur la machine de gauche on place la palette et l'on encode les défauts (machine "en pause", opérateur "actif"), tandis que la machine de droite présente la pièce à scier, effectue les sciages aux différents points d'intervention mis en mémoire dans l'ordinateur (10) (opérateur "en pause", machine "active").

Ce type d'opération en "temps masqué" est illustré à la fig.9 où l'on peut se rendre compte que le même type de procédure est suivi au niveau des opérations de sciage et de clouage. En fait, deux séries de tâches identiques sont faites en continu, sur les lignes (g) et (d). La continuité est garantie parce que chaque tâche de machine est suivie d'une tâche humaine de même durée de sorte que la machine jumelée fonctionnant alternativement à gauche et à droite, les palettes qui traversent le processus sortent de façon continue à gauche et à droite alternativement.

Selon l'usage, le décalage de temps entre les deux lignes de réparation/rénovation est dénommé "temps masqué". L'efficacité de ce processus est fonction du synchronisme possible entre "tâches humaines" et "tâches robotisées".

Selon la présente invention, ce synchronisme est optimum lorsque quatre personnes servent deux stations analogues à celles symbolisées à la fig.9. La même figure illustre le fait que, selon les ressources humaines dont on dispose, on peut étaler le travail dans le temps. On peut d'abord faire le sciage et, ensuite, le clouage, avec une autre équipe d'opérateurs. Dans ce cas, l'encodage des emplacements des interventions sera éventuellement renouvelé. Par contre, quand on effectue sans discontinuer tout le processus, l'ordinateur (10) peut assurer la commande du robot de clouage comme l'évoque la fig.9.

A la fig.3, on a schématisé l'implantation globale dont fait partie l'équipement selon l'invention. Deux voies de travail (g et d) sont prévues de façon à pouvoir réaliser une séquence de travail en' "temps masqué" selon une procédure qui vient d'être explicitée. L'arrivée des palettes défectueuses se fait en amont, aux emplacements indiqués par les flèches, de sorte que les palettes viennent en deux séries, ou rangs, parallèles. Les opérateurs (H), (voir fig.3) agissent alternativement sur la voie de gauche et sur la voie de droite. La réparation d'une série de palettes est concrètement une opération périodique. Un même équipement surveillé correctement par un être humain, peut faire un travail continu de deux tâches pratiquement identiques réalisées alternativement sur la voie g et sur la voie d.

La notion de temps masqué ayant été correctement définie, on comprend que la réparation d'objets défectueux peut se faire en adoptant cette méthodologie dans la mesure où l'ensemble des défauts peut être divisé en catégories de tâches de réparation d'égale durée. Dans ces conditions, deux équipements peuvent travailler en alternance sur un même objet pendant un même intervalle de temps, permettant ainsi pratiquement de doubler la productivité, laquelle est un facteur fondamental dans ce type d'actvité.

La réparation d'ensembles rectilignes tels que les palettes de manutention n'a fait que peu l'objet d'une application du processus de travail en temps masqué. Le but de la présente invention est de systématiser cette application par un équipement adéquat.

Dans le cas d'un objet comme "l'euro-palette", consignée actuellement à un prix d'environ 20 Euros les praticiens envisagent uniquement la réparation d'un maximum de deux planchettes de l'ensemble. Les autres dégâts occasionnés à la palette ne sont pas justifiables comme candidats à une réparation:ce sont notamment: la moindre résistance due à une attaque chimique globale ou locale (attaque par un acide renversé lors des manipulations par exemple), le changement permanent de forme (carré devenu losange).

La réparation de l'ensemble rectiligne est donc faite de trois tâches principales:
- Inspection/Visualisation,
- Sciage,
- Remplacement-clouage.

Si l'on considère un processus industriel continu où l'intervention humaine est synchronisée avec celle des robots, on a le schéma suivant des différentes tâches:
- Arrivée de l'objet,
- Inspection, saisie de données relatives au(x) défaut(s) à traiter,
- Réfection: Sciage-clouage,
- Départ.

Ces tâches sont visualisées sur les figures 3 et 9. Pour un ensemble d'éléments rectilignes tel qu'une palette de manutention, la tâche pour laquelle on dispose d'équipement assez courant et facilement implantable est le clouage. Il est malheureusement mis actuellement en oeuvre de façon discontinue et mal adaptée. Le robot de clouage est souvent mis en oeuvre après un sciage manuel et le travail en "temps masqué" au sens où elle a été définie ci-dessus est très difficile à mettre en place avec une coordination optimale.

La présente invention a donc enfin pour but également de bien définir une station de sciage isolée ou associée à une station de clouage située en aval de sorte que l'ensemble soit essentiellement mobile. L'invention est directement implantable sur l'aire d'un site de fabrication ou de stockage de façon à être employée avec un ensemble robot de clouage de telle sorte que l'on constitue les maillons essentiels d'une chaîne de réparation de palettes permettant une activité en temps masqué, l'équipement étant totalement transportable d'un endroit à l'autre en très peu de temps. Selon l'invention, par une exploitation judicieuse de la notion de "temps masqué", on peut garantir un flux de réparations extrêmement cadencé avec un personnel réduit et dépourvu d'expertise spéciale dans la mesure où les schémas de fonctionnement (fig.3) et de fonctionnement (fig.9) sont suivis.

Bien entendu la présente invention n'est aucunement limitée au mode de réalisation donné à titre d'exemple sur base des dessins annexés mais elle est au contraire susceptible de nombreuses variantes accessibles à l'homme de l'art sans s'écarter de la portée de l'invention telle qu'elle est définie dans les revendications qui suivent.

## Revendications

1. Equipement de réparation et de rénovation d'un ensemble structuré d'éléments rectilignes faits en matériau naturel ou de synthèse tel que, par exemple, une palette de manutention, dans lequel deux unités distinctes comportent des moyens de saisie/mémorisation de données et sont installées de sorte que les diverses tâches de réparation/rénovation puissent être effectuées, à l'aide de ces unités, par des opérations en temps masqué grâce à l'action conjointe et correctement synchronisée d'interventions humaines et d'interventions de robots installés sur lesdites unités, **caractérisée en ce que** chaque unité est montée sur une structure (13) à module d'emboîtement (11,12) et est déplaçable du fait qu'elle est supportée par quatre pieds (1) rétractables à vérin intégré.

2. Equipement de réparation et de rénovation d'un ensemble structuré d'éléments rectilignes faits en matériau naturel ou de synthèse tel que, par exemple, une palette de manutention, selon la revendication 1, dans lequel lesdites tâches de réparation/rénovation effectuées "en temps masqué", à l'aide desdits robots installés sur lesdites unités, sont réalisées par des opérations faites en mode "manuel" ou en mode "automatique" et sont essentiellement des tâches séquentielles de sciage et de clouage, **caractérisé en ce que** l'unité à robot de sciage comporte une ou plusieurs scies(s) horizontale(s) à fonctionnement symétrique (g),(d) et coulissant le long d'un axe vertical (16).

3. Equipement de réparation et de rénovation d'un ensemble structuré d'éléments rectilignes faits en matériau naturel ou de synthèse tel que, par exemple, une palette de manutention, selon les revendications qui précèdent **caractérisé en ce que** les points d'intervention (i, m, h) où l'ensemble structuré ou la palette doit être réparé sont déterminés par deux paramètres dont l'un est la position angulaire d'un plateau support (6) et l'autre est l'amplitude de la translation nécessaire pour que ladite scie (9) horizontale soit en contact avec la palette (2) à l'endroit du défaut,
ces deux paramètres étant stockés dans la mémoire d'un ordinateur (10) et servant de données d'entrée, lors de l'intervention de machines robotisées effectuant les opérations de sciage et de clouage.

4. Equipement de réparation et de rénovation d'un ensemble structuré d'éléments rectilignes faits en matériau naturel ou de synthèse tel que, par exemple, une palette de manutention, selon la revendication 3 **caractérisé en ce que** lesdits paramètres servant de données d'entrées sont associés, pour l'opération de sciage effectuée par le robot de sciage monté sur l'unité de sciage, à un paramètre supplémentaire fixant l'amplitude du coulissement de la scie le long dudit axe vertical (16) de sorte que trois niveaux de sciage puissent être choisis.

## Patentansprüche

1. Automatiche Vorrichtung zur Instandsetzung und Erneuung von geradliniger Natur-oder Kunststoffteilen zusammengesetzten Konstruktionen, zum Beispiel Transportpaletten in der zwei getrennte Einheiten mit Datenerfassung-und Speicherungsmittel versehen sind und welche so eingerichtet sind dass die verschiedenen Reparatur-und Erneuungsarbeiten durch Zusammenarbeit dieser Einheiten unter Menschlicher und Roboter-bedienung, ohneVerweilzeit, und mit genau synchronisierter Zeitvorgabe , mittels der auf diesen Einheiten angeordneten Robotern durchgefürhrt werden **dadurch gekennzeichnet dass** jede Einheit auf einer Rahmenkonstruktion (13) mit Einsteckmodul (11,12) beweglich montiert ist, da sie auf vier mit eingebauten pneumatischen Hubzylindern versehenen, einziehbaren Standfüssen ruht.

2. Automatiche Vorrichtung zur Instandsetzung und Erneuung von geradliniger Natur-oder Kunststoffteilen zusammengesetzten Konstruktionen, zum Beispiel Transportpaletten, gemässAnspruch 1, in der die erwähnten, ohne Verweilzeit durchgeführten Reparatutr-und Erneuerungsarbeiten entweder von Hand oder automatisch gesteuert werden und im wesentlichen aus Folgen von Säge- und Nagelungsarbeiten bestehen ; **dadurch gekennzeichnet dass** der Sägeroboter mit einer oder mehreren symetrisch (L, R ) arbeitenden wagrechten Sägen ausgerustet ist und längs einer senkrechten Achse (16) vershiebbar ist..

3. Automatiche Vorrichtung zur Instandsetzung und Erneuung von geradliniger Natur-oder Kunststoffteilen zusammengesetzten Konstruktionen, zum Beispiel Transportpaletten, gemäss der obigen Ansprüchen **dadurch gekennzeichnet dass** die exakten Stellen ( i,m,h ) an denen die Konstruktion oder Palette repariert werden soll mit zwei parametern festgelegt sind : zum einem mit dem Winkel der Auflagerfläche (6) zum anderen mit der Grösse der Verschiebung welche die erwähnte Säge (9) in Kontakt mit der zu reparierenden Stelle der Palette (2) bringt , wobei beide Parameter in einem Komputer gespeichert werden und als Steuerdaten für den Einsatz der Roboter verwendet werden, welche die Säge-und Nagelungsarbeiten durchführen.

4. Automatiche Vorrichtung zur Instandsetzung und Erneuung von geradliniger Natur-oder Kunststoffteilen zusammengesetzten Konstruktionen, zum Beispiel Transportpaletten, gemäss Anspruch 3, **dadurch gekennzeichnet dass** , die genannten Steuerungsdaten für den Betrieb der auf dem Roboter montierten Säge einem zusätzlichen Parameter, der Hubhöhe längs der oben erwähnten, senkrechten Achse (16 ) zugeordnet sind, sodass drei Sägehöhen gewählt werden können.

## Claims

1. Automatic machine for repairing and renewing defects located on a structural assembly of linear pieces of raw- or synthetic material such as, a handling pallet, wherein two separate units have data input- and datastorage means and are suitably installed so that various repairing and renewing tasks can be performed by means of these units, under timesharing operating conditions using simultaneous human work that is synchronized with robots that are installed on the units, **characterized in that** each unit is mounted upon a supporting mount (13) with joined modular parts (11,12) and can be displaced using four retractable feet (1) with integrated hydraulic raising jacks.

2. Automatic machine for repairing and renewing defects located on a structural assembly of linear pieces of raw- or synthetic material such as, a handling pallet, according to claim 1 wherein said repairing and renewing tasks are performed under timesharing operating conditions and are performed in the'manual'mode or in the'automatic'operating mode, and substantially are sequential saw-and nailing tasks ,**characterized in that** the sawing robot unit involves a single plurality of horizontally disposed saws, working in a symetrical ( L ) ,( R ) arrangement with a possible displacement along a vertical axis ( 16 )..

3. Automatic machine for repairing and renewing defects located on a structural assembly of linear pieces of raw- or synthetic material such as, a handling pallet according to the above claims **characterized in that** the working spots (i,m,h) where the structural assembly of linear pieces, or the handling pallet,has to be repaired, is determined by means of a couple of parameters, the former parameter being the actual angular position of the supporting frame (6), and the latter being the shift range which is necessary for the horizontal saw (9) to be in contact with pallet (2) at the defective location, said couple of parameters being stored in the data storage register of a computer (10), so that they are further used and processed as input data for robotic machines which are in charge of the sawing - and of the down-nailing operations.

4. Automatic machine for repairing and renewing defects located on a structural assembly of linear pieces of raw- or synthetic material such as, a handling pallet according to claim3 **characterized in that**, in the case of the sawing operation performed by the sawing robot, said input parameters are jointly processed, as input data, together with an additionnal parameter giving the actual upward shift range of the saw on said vertical axis (16) so that three possible sawing levels can be selected..
